(19) Europäisches Patentamt
European Patent Office
Office européen des brevets

(11) **EP 4 022 266 B1**

(12) **EUROPÄISCHE PATENTSCHRIFT**

(45) Veröffentlichungstag und Bekanntmachung des Hinweises auf die Patenterteilung:
**05.03.2025 Patentblatt 2025/10**

(21) Anmeldenummer: **20760841.5**

(22) Anmeldetag: **21.08.2020**

(51) Internationale Patentklassifikation (IPC):
**G01G 19/10** (2006.01)  **B62D 5/00** (2006.01)
**B60G 17/016** (2006.01)  **B62D 5/04** (2006.01)

(52) Gemeinsame Patentklassifikation (CPC):
**B60G 17/0161; B60G 17/0162; B62D 5/0463; G01G 19/10;** B60G 2300/02; B60G 2400/106; B60G 2400/204; B60G 2400/42; B60G 2400/51222; B60G 2400/60; B60G 2400/61; B60G 2500/40; B60G 2600/02; B62D 6/06

(86) Internationale Anmeldenummer:
**PCT/EP2020/073475**

(87) Internationale Veröffentlichungsnummer:
**WO 2021/037707 (04.03.2021 Gazette 2021/09)**

(54) **LENKKRAFTUNTERSTÜTZUNG FÜR EIN KRAFTFAHRZEUG**

POWER STEERING FOR A MOTOR VEHICLE

DIRECTION ASSISTÉE POUR UN VÉHICULE AUTOMOBILE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **28.08.2019 DE 102019006078**

(43) Veröffentlichungstag der Anmeldung:
**06.07.2022 Patentblatt 2022/27**

(73) Patentinhaber: **MAN Truck & Bus SE 80995 München (DE)**

(72) Erfinder:
• **GERRITZEN, Ralph**
**80995 München (DE)**
• **MENDLER, Hardy**
**80995 München (DE)**

(74) Vertreter: **v. Bezold & Partner Patentanwälte - PartG mbB**
**Ridlerstraße 57**
**80339 München (DE)**

(56) Entgegenhaltungen:
EP-A1- 3 466 754          DE-A1- 10 245 975
DE-A1- 102009 011 044     DE-A1- 102011 011 000
DE-A1- 102018 200 473     DE-A1- 3 909 210
DE-A1- 3 922 527

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft ein Verfahren zur Einstellung einer Lenkkraftunterstützungsvorrichtung für eine Vorderachse eines Kraftfahrzeugs und ein Kraftfahrzeug mit einem Lenksystem, dass über eine Lenkkraftunterstützungsvorrichtung verfügt.

In Kraftfahrzeugen können Lenkkraftunterstützungsvorrichtungen vorgesehen sein, die es ermöglichen, eine vom Fahrer zum Drehen des Lenkrads benötigte Lenkkraft zu verringern. Die Lenkkraftunterstützungsvorrichtung verstärkt die vom Fahrer aufgebrachte Kraft zum Lenken beispielsweise durch ein Hydrauliksystem oder einen Elektromotor.

Beispielsweise offenbart die DE 102 45 975 A1 eine Hilfskraftlenkung mit hydraulischer Hilfskraftunterstützung. Zur Steuerung der Hilfskraftlenkung können Parameter wie Fahrgeschwindigkeit, Lenkgeschwindigkeit, Beschleunigungen, Geschwindigkeit, Beladungszustand, Motordrehzahl, ESP-Signale, ABS-Signale, Lenkwinkel sowie fahrerindividuelle Einstellungen verarbeitet werden.

Das Dokument DE 10 2009 011044 A1 beschreibt ein Verfahren zur Einstellung der Lenkungscharakteristik einer elektromechanischen Fahrzeuglenkung, bei der eine Lenkkraftunterstützung und/oder eine Rückstellung der Lenkung in Abhängigkeit aktueller Betriebsparameter des Fahrzeugs anhand vorgegebener Algorithmen bestimmt und durch entsprechende Ansteuerung eines Elektromotors eingestellt werden. Mittels einer die Vorderachslast des Fahrzeugs repräsentierenden Größe und einer in der Lenkung vorgehaltenen Berechnungsvorschrift wird eine Anpassungsgröße bestimmt und in die Bestimmung der Lenkkraftunterstützung und/oder Rückstellung einbezogen, um eine automatische Anpassung der Lenkungscharakteristik an die Vorderachslast vorzunehmen.

Das Dokument EP 3 466 754 A1 betrifft ein Verfahren zum Einstellen einer Leuchtweite eines Scheinwerfers eines Kraftfahrzeugs mit einer Hinterachse, die eine Hinterachsluftfederanlage zur Niveauregulierung der Hinterachse aufweist. Mindestens ein Druckwert der Hinterachsluftfederanlage wird erfasst. Die Leuchtweite des Scheinwerfers wird basierend auf dem mindestens einen erfassten Druckwert verändert.

Das Dokument DE 39 09 210 A1 offenbart eine elektrohydraulische Lenkhilfe für Kraftfahrzeuge mit einer Meßeinrichtung zur Erfassung des vom Fahrer auf eine Lenkwelle aufgebrachten Momentes.

Das Dokument DE 10 2011 011000 A1 betrifft ein Verfahren zum Betreiben einer Servolenkung eines Fahrzeugs. Ein auf lenkbare Räder des Fahrzeugs wirkendes unterstützendes Moment wird in Abhängigkeit von der Auflast verändert, mit welcher die lenkbaren Räder auf der Fahrbahn aufliegen.

Weitere Verfahren zur Einstellung einer Lenkkraftunterstützungsvorrichtung sind aus der DE 10 2018 200473 A1 und der DE 39 22 527 A1 bekannt.

Der Erfindung liegt die Aufgabe zu Grunde, eine alternative und/oder verbesserte Technik zum Vorsehen einer Lenkkraftunterstützung zu schaffen.

Die Aufgabe wird gelöst durch die Merkmale des unabhängigen Anspruchs 1. Vorteilhafte Weiterbildungen sind in den abhängigen Ansprüchen und der Beschreibung angegeben.

Die Erfindung schafft ein Verfahren zur Einstellung einer Lenkkraftunterstützungsvorrichtung für eine Vorderachse eines Kraftfahrzeugs, vorzugsweise eines Nutzfahrzeugs. Das Verfahren weist ein Erfassen mindestens eines Druckwerts einer Hinterachsluftfederanlage zur Niveauregulierung einer Hinterachse des Kraftfahrzeugs auf. Das Verfahren weist ein Ermitteln eines ersten Werts, der sich auf eine Belastung der Vorderachse des Kraftfahrzeugs bezieht, basierend auf dem erfassten mindestens einen Druckwert auf. Das Verfahren weist ein Einstellen einer Grundeinstellung der Lenkkraftunterstützungsvorrichtung basierend auf dem ermittelten ersten Wert auf.

Das Verfahren bietet den Vorteil, dass ohne Vorsehen oder Auswerten spezieller Sensorik an der Vorderachse eine Vorderachsbelastung ermittelt und eine Lenkkraftunterstützungsvorrichtung entsprechend eingestellt werden kann. Bei Kraftfahrzeugen, insbesondere Nutzfahrzeugen, mit einer Hinterachsluftfederanlage ist die für das Verfahren notwendige Sensorik nämlich bereits verbaut. Basierend auf den Messwerten eines Drucksensors der Hinterachsluftfederanlage kann unter Berücksichtigung von Kraft- und Momentengleichgewicht die Vorderachsbelastung zuverlässig ermittelt werden.

Die Grundeinstellung wird erfindungsgemäß durch die Lenkkraftunterstützungsvorrichtung bewirkte Lenkkraftunterstützung in Abhängigkeit des ermittelten ersten Werts vorgeben. Bevorzugt kann die Vorderachse des Kraftfahrzeugs ohne Vorderachsluftfederanlage vorgesehen sein.

Es ist möglich, dass die Vorderachse des Kraftfahrzeugs durch Stahlfedern, vorzugsweise Blattfedern, gefedert ist.

In einer Ausführungsform wird der mindestens eine Druckwert in einem normalen Lastzustand des Kraftfahrzeugs, im Stand des Kraftfahrzeugs und/oder während des Fahrens des Kraftfahrzeugs bei im Wesentlichen gleichbleibender Fahrgeschwindigkeit und/oder im Wesentlichen beschleunigungsfreier Fahrt und/oder Geradeausfahrt erfasst und/oder aktualisiert. So kann beispielsweise sichergestellt werden, dass keine temporären Einflüsse z. B. aufgrund von Längs- oder Querbeschleunigungen die Erfassung des Druckwerts und somit die Grundeinstellung ungewünscht beeinflussen.

In einer weiteren Ausführungsform wird das Ermitteln des ersten Werts und das Einstellen der Grundeinstellung wiederholt, wenn der mindestens eine Druckwert aktualisiert wird. Damit können auch sich verändernde Normallastbedingungen (wie z. B. bei einem Müllsammelfahrzeug, einem Salzstreufahrzeug, einem Reisebus oder einfach ein sich leerender Kraftstofftank) durch Aktualisieren der Grundeinstellung berücksichtigt werden.

In einer weiteren Ausführungsform basiert das Ermitteln des ersten Werts basierend auf dem erfassten Druckwert ferner auf einem vorbestimmten oder geschätzten Schwerpunkt des Kraftfahrzeugs, einem vorbestimmten oder geschätzten Lasteinleitungspunkt des Kraftfahrzeugs und/oder einer vorbestimmten oder geschätzten Masse des Kraftfahrzeugs.

In einem Ausführungsbeispiel weist das Erfassen des mindestens einen Druckwerts der Hinterachsluftfederanlage ein Erfassen eines Druckwerts eines Luftfederbalgs der Hinterachsluftfederanlage auf lediglich einer Fahrzeuglängsseite des Kraftfahrzeugs auf. Alternativ kann beispielsweise auch ein Erfassen eines ersten Druckwerts eines ersten Luftfederbalgs der Hinterachsluftfederanlage und ein Erfassen eines zweiten Druckwerts eines zweiten Luftfederbalgs der Hinterachsluftfederanlage umfasst sein. Zum Beispiel können der erste Luftfederbalg und der zweite Luftfederbalg an einander gegenüberliegenden Fahrzeuglängsseiten des Kraftfahrzeugs angeordnet sein.

Das Verfahren weist erfindungsgemäß ferner ein Ermitteln eines zweiten Werts, der sich auf einen aktuellen Betrieb des Kraftfahrzeugs während des Fahrens des Kraftfahrzeugs bezieht, auf. Das Verfahren weist erfindungsgemäß zusätzlich ein Anpassen der Grundeinstellung der Lenkkraftunterstützungsvorrichtung basierend auf dem ermittelten zweiten Wert auf. Dies kann den Vorteil haben, dass eine praxisgerechte dynamische Anpassung der Lenkkraftunterstützung erfolgen kann. So kann beispielsweise eine Trägheit der Ermittlung der Vorderachslast mittels der Druckwerte der Hinterachsluftfederanlage für die dynamische Anpassung unbeachtlich sein. Stattdessen kann beispielsweise auf ein hochdynamisches Erfassungs- oder Ermittlungssystem für die Feineinstellung der Lenkkraftunterstützung zurückgegriffen werden. Zudem kann die (temporäre) Feineinstellung bzw. Anpassung der Grundeinstellung direkt auf die Grundeinstellung aufgesetzt werden, sodass besonders dynamische Anpassungen möglich sind.

In einer Weiterbildung erfolgt das Anpassen der Grundeinstellung dynamisch oder fortwährend (z. B. kontinuierlich, diskontinuierlich, nach vorgegebenen Intervallen usw.) während des Betriebs des Kraftfahrzeugs. Alternativ oder zusätzlich kann beispielsweise das Ermitteln des zweiten Werts fortwährend (z. B. kontinuierlich, diskontinuierlich, nach vorgegebenen Intervallen usw.) während des Betriebs, vorzugsweise während des Fahrens, des Kraftfahrzeugs erfolgen.

In einem weiteren Ausführungsbeispiel ist das Anpassen der Grundeinstellung und/oder das Ermitteln des zweiten Werts nur freigegeben, wenn das Kraftfahrzeug eine vorgegebene Betriebsbedingung erfüllt. Andernfalls kann das Anpassen der Grundeinstellung und/oder das Ermitteln des zweiten Werts beispielsweise gesperrt sein.

In einer Weiterbildung kann das Anpassen der Grundeinstellung und/oder das Ermitteln des zweiten Werts nur freigegeben sein, wenn eine aktuelle Fahrgeschwindigkeit des Kraftfahrzeugs eine vorgegebene Mindestgeschwindigkeit (z. B. 5 hm/h, 20 km/h, 15 km/h oder 20 km/h) des Kraftfahrzeugs überschreitet.

In einer Ausführungsform wird der zweite Wert von einem Antiblockiersystem, einem elektronischen Bremssystem, einem elektronischen Stabilitätsprogramm, einem Beschleunigungssensor und/oder einem Kraftsensor des Kraftfahrzeugs ermittelt. Damit kann eine hochdynamische Anpassung der Grundeinstellung während des Fahrens des Kraftfahrzeugs vorgenommen werden.

Erfindungsgemäß bezieht sich der zweite Wert auf eine aktuelle Beschleunigung des Kraftfahrzeugs. In einer weiteren Ausführungsform bezieht sich der zweite Wert auf eine aktuelle Beschleunigung der Vorderachse. Zusätzlich kann sich der zweite Wert zudem auf eine aktuelle Bremskraft des Kraftfahrzeugs und/oder der Vorderachse beziehen.

In einer weiteren Ausführungsform ist die aktuelle Beschleunigung positiv oder negativ oder kann positiv oder negativ sein. Alternativ oder zusätzlich ist die aktuelle Beschleunigung eine Querbeschleunigung und/oder eine Längsbeschleunigung oder kann eine Querbeschleunigung und/oder eine Längsbeschleunigung sein.

In einer weiteren Ausführungsform erfolgt das Anpassen der Grundeinstellung nur, wenn der ermittelte zweite Wert größer als ein vorbestimmter Grenzwert ist; sich der ermittelte zweite Wert auf eine aktuelle Beschleunigung bezieht, die größer als ein vorgegebener positiver Beschleunigungsgrenzwert ist; sich der ermittelte zweite Wert auf einer aktuelle Beschleunigung bezieht, die größer als ein Absolutwert eines vorgegebenen negativen Beschleunigungsgrenzwerts ist; und/oder sich der ermittelte zweite Wert auf eine Bremskraft bezieht, die größer als eine vorgegebene Mindestbremskraft ist. Damit wird die hochdynamische Einstellungsanpassung nur in besonderen Fahrsituationen vorgenommen, wenn deren Wirkung tatsächlich vorteilhaft eingesetzt werden kann (z. B. bei Bremsmanövern oder in Kurven).

Erfindunsgemäß erfolgt das Anpassen der Grundeinstellung nur temporär solange bis der ermittelte zweite Wert kleiner als ein vorgegebener Grenzwert ist und vorzugsweise bis der ermittelte zweite Wert sich auf eine aktuelle Bremskraft bezieht, die kleiner als eine vorgegebenen Mindestbremskraft ist. Das Anpassen der Grundeinstellung erfolgt erfindungsgemäß nur temporär solange bis der ermittelte zweite Wert sich auf eine aktuelle Beschleunigung bezieht, die kleiner als ein vorgegebener positiver Beschleunigungsgrenzwert ist und/oder bis der ermittelte zweite Wert sich auf eine aktuelle Beschleunigung bezieht, die kleiner als ein Absolutwert eines vorgegebenen negativen Beschleunigungsgrenzwerts ist. So kann stets auf die Grundeinstellung zurückgegriffen werden, wenn die temporäre Belastungsänderung an der Vorderachse vorüber ist.

Die Offenbarung betrifft zudem auch ein nicht beanspruchtes Lenksystem für ein Kraftfahrzeug, vorzugsweise ein Nutzfahrzeug (z. B. Lastkraftwagen oder Omnibus). Das Lenksystem weist eine, vorzugsweise hydraulische, elektrische oder elektrohydraulische, Lenkkraftunterstützungsvorrichtung zum Aufbringen einer einen Fahrer des Kraftfahrzeugs beim Lenken unterstützenden Lenkkraft auf. Mindestens ein Steuergerät (z. B. zentrales Steuergerät, Hinterachsluftfederanlage-Steuergerät und/oder Lenksystem-Steuergerät) ist dazu ausgebildet ist, ein Verfahren wie hierin offenbart auszuführen.

Vorzugsweise kann sich der Begriff "Steuergerät" auf eine Elektronik (z. B. mit Mikroprozessor(en) und Datenspeicher) und/oder mechanische Steuerung beziehen, die je nach Ausbildung Steuerungsaufgaben und/oder Regelungsaufgaben übernehmen kann. Auch wenn hierin der Begriff "Steuern" verwendet wird, kann damit gleichsam zweckmäßig auch "Regeln" bzw. "Steuern mit Rückkopplung" umfasst sein.

Die Erfindung betrifft auch ein Kraftfahrzeug, vorzugsweise ein Nutzfahrzeug (z. B. Lastkraftwagen oder Omnibus), aufweisend das Lenksystem wie hierin offenbart und eine Hinterachsluftfederanlage mit mindestens einem Drucksensor, der vorzugsweise mit dem Steuergerät in Kommunikationsverbindung steht.

Die zuvor beschriebenen bevorzugten Ausführungsformen und Merkmale der Erfindung sind beliebig miteinander kombinierbar. Weitere Einzelheiten und Vorteile der Erfindung werden im Folgenden unter Bezug auf die beigefügten Zeichnungen beschrieben. Es zeigen:

Figur 1 eine schematische Seitenansicht eines Nutzfahrzeugs; und

Figur 2 ein Ablaufdiagramm eines bespielhaften Verfahrens zur Lenkunterstützung gemäß einer beispielhaften Ausführungsform der vorliegenden Offenbarung.

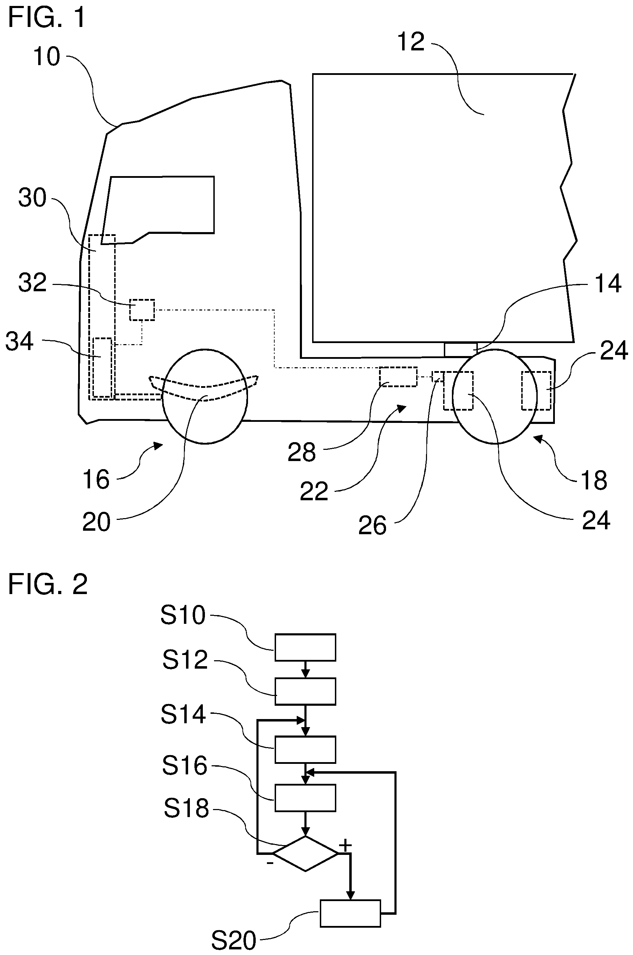

In Figur 1 ist ein Kraftfahrzeug 10 gezeigt. Das Kraftfahrzeug 10 ist bevorzugt als Sattelzugmaschine zum Ziehen eines Sattelaufliegers 12 über einen Königszapfen 14 ausgebildet. Es ist allerdings auch möglich, dass das Kraftfahrzeug 10 anders ausgebildet ist, z. B. als Lastkraftwagen mit einem (Lade-)Aufbau oder ein Personenkraftwagen (Pkw).

Das Kraftfahrzeug 10 weist eine Vorderachse 16 und eine Hinterachse 18 auf.

Im Ausführungsbeispiels ist die Vorderachse 16 über Stahlfedern 20, vorzugsweise Stahlblattfedern, gefedert. Allgemein ist auch eine andere Federung möglich.

Die Hinterachse 18 weist eine Hinterachsluftfederanlage 22 auf. Die Hinterachsluftfederanlage 22 ist als eine elektronisch gesteuerte Hinterachsluftfederanlage (ECAS - System: Electronically Controlled Air Suspension) zur Niveauregulierung der Hinterachse 18 ausgebildet. Die Hinterachsluftfederanlage 22 kann mehrere Luftfederbälge 24, mindestens einen Drucksensor 26 und ein Steuergerät 28 aufweisen.

Die Luftfederbälge 24 sind an beiden Radseiten der Hinterachse 18 (nur eine Radseite in Figur 1 dargestellt) angeordnet. Über ein Zuführen oder Ablassen von Druckluft kann über die Luftfederbälge 24 ein Höhenniveau der Hinterachse 18 verstellt werden. Damit kann beispielsweise ein gleich bleibendes Höhenniveau der Hinterachse 18 bei unterschiedlichen Lasten des Sattelaufliegers 12 eingestellt und das Ab- und Aufsatteln des Sattelaufliegers 12 einfacher vorgenommen werden.

Das Steuergerät 28 ist zur Steuerung der Hinterachsluftfederanlage 22 ausgebildet. Beispielsweise steuert das Steuergerät 28 die Zu- und Abfuhr von Druckluft zu den Luftfederbälgen 24 über das Öffnen und Schließen von entsprechenden Ventilen. Zusätzlich ist das Steuergerät 28 mit dem mindestens einen Drucksensor 26 zum Empfangen von Signalen von dem mindestens einen Drucksensor 26 verbunden. Der mindestens eine Drucksensor 26 erfasst (misst) einen (Luft-) Druck in mindestens einem der Luftfederbälge 24 und sendet ein entsprechendes Signal an das Steuergerät 28.

Das Kraftfahrzeug 10 weist zusätzlich ein in Figur 1 nur schematisch angedeutetes Lenksystem 30 zum Lenken der Vorderachse 16 des Kraftfahrzeugs 10 auf. Zweckmäßig umfasst das Lenksystem 30 ein drehbares Lenkrad für einen Fahrer des Kraftfahrzeugs 10. Das Lenksystem 30 ist als ein Servo-Lenksystem bzw. ein Lenksystem mit Lenkkraftunterstützung ausgeführt. Zur Verringerung der Lenkkräfte weist das Lenksystem 30 eine Lenkkraftunterstützungsvorrichtung 34 auf. Die Lenkkraftunterstützungsvorrichtung 34 kann bevorzugt elektrohydraulisch ausgeführt sein. Zum Beispiel kann die Lenkkraftunterstützungsvorrichtung 34 einen Elektromotor und einen Hydraulikkreis bzw. ein Hydraulikgetriebe aufweisen. Der Elektromotor kann mit einem Ende einer drehbaren Lenkstange verbunden sein. An dem entgegengesetzten Ende der Lenkstange kann das Lenkrad angebracht sein. Der Elektromotor ist funktional mit dem Hydraulikkreis verbunden, um eine von dem Hydraulikkreis bewirkte Lenkkraftunterstützung einzustellen, z. B. durch Einstellen von einem oder mehreren Steuerventilen. Der Hydraulikkreis ist schließlich mit der lenkbaren Vorderachse 16 verbunden, um die vom Fahrer gewünschte Lenkbewegung zu bewirken. Es ist auch möglich, dass die Lenkkraftunterstützung anders ausgeführt ist, z.B. rein hydraulisch oder rein elektromotorisch.

Das Kraftfahrzeug 10 weist zudem ein zentrales Steuergerät 32 für zentrale Steuerungsaufgaben des Kraftfahrzeugs 10 auf. Das zentrale Steuergerät 32 kann in Kommunikationsverbindung mit der Lenkkraftunterstützungsvorrichtung 34, dem Steuergerät 28 und/oder dem Drucksensor 26 stehen. Das zentrale Steuergerät 32 kann dazu ausgeführt sein, das nachfolgend beschriebene Verfahren auszuführen. Es ist auch möglich, dass das Lenksystem 30 selbst ein Steuergerät zum Steuern eines Betriebs der Lenkkraftunterstützungsvorrichtung 34 aufweist. Das Steuergerät kann in Kommunikationsverbindung mit dem Steuergerät 32, dem Steuergerät 28 und/oder dem Drucksensor 26 stehen.

In Figur 2 ist ein beispielhaftes Verfahren zur Lenkkraftunterstützung offenbart, das nachfolgend unter Bezugnahme auf Figur 1 näher beschrieben ist.

In einem Schritt S10 wird zunächst ein Druckwert des Luftfederbalgs 24 von dem Drucksensor 26 erfasst. Hier kann beispielsweise ein Druckwert von einem Luftfederbalg 24 auf nur einer Radseite der Hinterachse 18 erfasst werden. Für ein genaueres Verfahren besteht allerdings auch die Möglichkeit, dass ein Druckwert von einem Luftfederbalg 24 auf einer Radseite der Hinterachse 18 und ein Druckwert von einem Luftfederbalg 24 auf einer gegenüberliegenden Radseite der Hinterachse 18 von zwei entsprechenden Drucksensoren 26 erfasst werden. D. h., es werden Druckwerte von Luftfederbälgen auf beiden Fahrzeuglängsseiten erfasst. Hiermit können insbesondere unsymmetrische Lastverteilungen erkannt und berücksichtigt werden. Die Erfassung von einem Druckwert eines Luftfederbalgs 24 auf nur einer Radseite der Hinterachse 18 kann ebenfalls zuverlässige Werte für das Verfahren liefern, insbesondere bei symmetrischer Lastverteilung auf die Hinterachse 18. Der Druckwert kann ein absoluter Druckwert oder ein relativer Druckwert, d. h. eine Druckwertveränderung, sein.

In einem Schritt S12 wird ein erster Wert ermittelt, der sich auf eine Belastung der Vorderachse 16 unter Normalbedingungen bezieht. Der erste Wert wird basierend auf dem mindestens einen im Schritt S10 erfassten Druckwert ermittelt.

Beispielsweise können der oder die erfassten Druckwerte werden von dem mindestens einen Drucksensor 26 zu dem Steuergerät 28 der Hinterachsluftfederanlage 22 gesendet werden. Nun können beispielsweise der oder die erfassten Druckwerte von dem Steuergerät 28 über eine Kommunikationsverbindung an das zentrale Steuergerät 32 des Kraftfahrzeugs 10 gesendet werden, das wiederum über eine Kommunikationsverbindung mit der Lenkkraftunterstützungsvorrichtung 34 verbunden ist. Sofern vorhanden, können der oder die erfassten Druckwerte von dem Steuergerät 28 über eine Kommunikationsverbindung auch direkt an ein Steuergerät des Lenksystems 30 gesendet werden. Die weiteren Verfahrensschritte können dann beispielsweise von dem zentralen Steuergerät 32 oder dem Steuergerät des Lenksystems 30 durchgeführt werden, wie nachfolgend beispielhaft beschrieben ist. Es ist auch möglich, dass, je nach Aktorlogik und verwendeter Elektronikarchitektur, die Lenkkraftunterstützungsvorrichtung 34 direkt z. B. von dem Steuergerät 28 und/oder über ein PWM-Signal angesteuert wird.

Basierend auf dem mindestens einen erfassten Druckwert kann eine Hinterachslast an der Hinterachse 18 bzw. eine auf die Hinterachse 18 wirkende Hinterachsgewichtskraft ermittelt werden. Hierzu können beispielsweise vorbestimmte Formeln, Kennfelder, Kennlinien und/oder Tabellen usw. in dem zentralen Steuergerät 32 hinterlegt sein, die eine Hinterachslast bzw. Hinterachsgewichtskraft in Abhängigkeit von dem mindestens einen erfassten Druckwert angibt.

Basierend auf der ermittelten Hinterachslast bzw. Hinterachsgewichtskraft und einer bekannten oder geschätzten Position eines Schwerpunkts oder eines Lasteinleitungspunkts des Kraftfahrzeugs 10 kann eine Vorderachslast an der Vorderachse 16 (bzw. eine auf die Vorderachse 16 wirkende Vorderachsgewichtskraft) ermittelt werden. Hierfür kann beispielsweise ein Kräftegleichgewicht und ein Momentengleichgewicht aufgestellt und die entsprechenden Formeln ineinander eingesetzt werden.

Zur Berechnung der Vorderachsgewichtskraft $F_{VA}$ werden lediglich ein (horizontaler) Abstand $l_1$ zwischen der Hinterachse 18 und dem Lasteinleitungspunkt, d. h. in etwa oder genau das Sattelvormaß bei einer Sattelzugmaschine, ein (horizontaler) Abstand $l_2$ zwischen der Vorderachse 16 und der Hinterachse 18, d. h. der Radstand, sowie die ermittelte Hinterachsgewichtskraft $F_{HA}$ benötigt. Die Berechnung kann nach folgender Formel erfolgen.

$$(1) \qquad F_{VA} = F_{HA}\left(\frac{l_2}{l_2 - l_1} - 1\right)$$

mit:

$F_{VA}$     Vorderachsgewichtskraft

$F_{HA}$     Hinterachsgewichtskraft

$l_1$     Sattelvormaß bzw. Abstand zwischen Hinterachse und Lasteinleitungspunkt (Sattelkupplung)

$l_2$     Radstand

Der Radstand $l_2$ ist bekannt und in dem zentralen Steuergerät 32 gespeichert.

Der Schwerpunkt oder der Lasteinleitungspunkt des Kraftfahrzeugs 10 kann bekannt sein oder geschätzt werden. Insbesondere kann der Lasteinleitungspunkt des Kraftfahrzeugs 10 bekannt sein, wenn das Kraftfahrzeug 10 eine Sattelzugmaschine (wie in Figur 1 dargestellt) ist, da der Lasteinleitungspunkt über die Sattelkupplung eindeutig definiert ist. Bei Sattelzugmaschinen kann somit das Sattelvormaß $l_1$ bekannt und in dem zentralen Steuergerät 32 gespeichert sein. Bei Lastkraftwagen mit (Lade-)Aufbau ist der Schwerpunkt mit Aufbau ebenfalls bekannt, nicht aber der Schwerpunkt der Nutzlast. Hier (und bei anderen Kraftfahrzeugen) kann der Schwerpunkt des gesamten Kraftfahrzeugs inklusive der Nutzlast beispielsweise mittels eines Massenschätzers ermittelt oder geschätzt werden. Der Masseschätzer kann beispielsweise basierend auf erfassten Beschleunigungen und Verzögerungen des Kraftfahrzeugs 10 sowie erfassten Motorantriebsleistungen des Kraftfahrzeugs 10 Achslasten und einen Schwerpunkt des Kraftfahrzeugs 10 iterativ ermitteln. Hierbei kann das zweite Newtonsche Gesetz (Kraft ist Masse mal Beschleunigung) angewendet werden. Der Massenschätzer kann beispielsweise Teil eines Bremssystems des Kraftfahrzeugs 10 sein. Basierend auf dem geschätzten Schwerpunkt kann der Abstand $l_1$ zwischen Hinterachse und geschätztem Schwerpunkt bei Lastkraftwagen mit (Lade-)Aufbau ermittelt.

Die ermittelte Vorderachsbelastung repräsentiert erfindungsgemäß den ersten Wert.

Zweckmäßig wird der mindestens eine Druckwert in einem normalen Lastzustand des Kraftfahrzeugs 10 ermittelt. Bevorzugt kann der erste Wert somit im Stand des Kraftfahrzeugs ermittelt werden. Es ist allerdings auch möglich, dass der erste Wert während des Fahrens des Kraftfahrzeugs ermittelt oder aktualisiert wird. Der erste Wert kann während des Fahrens beispielsweise immer dann ermittelt werden, wenn das Kraftfahrzeug 10 bei einer im Wesentlichen gleichbleibenden Fahrgeschwindigkeit betrieben wird und/oder bei einer Wesentlichen beschleunigungsfreien Fahrt. Es ist möglich, dass Grenzwerte und/oder Toleranzen vorgegeben sind, die eine Fahrt bei einer im Wesentlichen gleichbleibender Fahrgeschwindigkeit oder eine im wesentlichen beschleunigungsfreie Fahrt festlegen. Ein Vorteil der Ermittlung während der Fahrt oder der Aktualisierung während eines Stillstands oder der Fahrt besteht darin, dass auch während des Betriebs des Kraftfahrzeugs auftretende Lastveränderungen, wie zum Beispiel bei Müllsammelfahrzeugen oder Bussen, in einer aktualisierten Grundeinstellung berücksichtigt werden können.

In einem Schritt S14 wird die Lenkkraftunterstützungsvorrichtung gemäß dem ermittelten ersten Wert in einer Grundeinstellung eingestellt. Der erste Wert dient als ein Basiswert oder Referenzwert zum Einstellen einer Basis- oder Grundunterstützung durch die Lenkkraftunterstützungsvorrichtung 34. Prinzipiell kann bei Ermittlung einer vergleichsweise großen Vorderachsbelastung eine größere, durch die Lenkkraftunterstützungsvorrichtung 34 bereitgestellte Lenkkraftunterstützung eingestellt werden. Hingegen kann bei Ermittlung einer vergleichsweise geringen Vorderachsbelastung (zum Beispiel bei einer Lehrfahrt) eine geringere Lenkkraftunterstützung eingestellt werden.

Wie erwähnt, besteht vorzugsweise die Möglichkeit der Aktualisierung des ersten Werts und der Grundeinstellung der Lenkkraftunterstützungsvorrichtung 34, wenn sich eine Normallastsituation während des Betriebs ändert und dies erkannt wird.

Es ist auch möglich, dass einige oder alle der Zwischenschritte, die zwischen der Ermittlung des mindestens einen Druckwerts der Hinterachsluftfederanlage 22 und der Einstellung gemäß Schritt S14 ausgeführt werden, zusammengefasst werden. In einem Ausführungsbeispiel kann somit lediglich mindestens ein Druckwert der Hinterachsluftfederanlage 22 erfasst werden und basierend auf diesem Druckwert direkt eine Einstellung im Schritt S12 vorgenommen werden. Dazu kann beispielsweise eine in dem zentralen Steuergerät 32 hinterlegte, vorbestimmte Zuordnung verwendet werden, die eine Einstellung in Abhängigkeit von dem mindestens einen erfassten Druckwert an der Hinterachse 18 angibt. Die Zuordnung kann beispielsweise in Form einer vordefinierten Kennlinie, eines vordefinierten Kennfelds, einer vordefinierten Tabelle und/oder einer vordefinierten Formel angegeben sein.

Die nachfolgend erläuterten Schritte S16 bis S20 können zum Teil optional ebenfalls durchgeführt werden, um das Verfahren zur Einstellung der Lenkkraftunterstützung weiter zu verbessern, wenn gewünscht.

Nur während das Fahrens des Kraftfahrzeugs wird erfindungsgemäß in einem Schritt S16 fortwährend ein zweiter Wert ermittelt und aktualisiert.

Der zweite Wert bezieht sich auf eine aktuelle Beschleunigung des Kraftfahrzeugs 10 bzw. der Vorderachse 16 des Kraftfahrzeugs 10. Der zweite Wert kann beispielsweise direkt als ein positiver oder negativer Längs- und/oder Querbeschleunigungswert vorliegen. Der zweite Wert kann beispielsweise auch durch eine an der Vorderachse 16 aufgebrachte Bremskraft, eine Wank- oder Kippbewegung eines Fahrerhauses oder des Kraftfahrzeugs 10 repräsentiert werden, da diese ebenfalls in einem Zusammenhang mit der aktuellen Beschleunigung des Kraftfahrzeugs 10 stehen können.

Informationen zur Ermittlung des zweiten Werts können besonders bevorzugt von einem Antiblockiersystem (ABS), einem elektronischen Bremssystem (EBS), einem elektronischen Stabilitätsprogramm (ESP), einem Beschleunigungssensor und/oder einem Kraftsensor des Kraftfahrzeugs 10 ermittelt werden.

Es ist möglich, dass der zweite Wert nur ermittelt oder nur ausgewertet wird, wenn das Kraftfahrzeug beispielsweise eine vorgegebene Betriebsbedingung erfüllt. Beispielsweise kann der zweite Wert nur dann ermittelt oder nur dann ausgewertet werden, wenn das Kraftfahrzeug 10 aktuell schneller fährt als eine vorgegebene Mindestgeschwindigkeit, zum Beispiel 5 km/h, 10 km/h, 15 km/h oder 20 km/h.

Erfindungsgemäß wird im Schritt S18 der ermittelte zweite Wert mit einem oder mehreren Grenzwerten verglichen. Erfindungsgemäß wird in einem Fall, in dem der zweite Wert ein positiver Beschleunigungswert ist, der sich aufgrund einer positiven Beschleunigung des Kraftfahrzeugs 10 ergibt, der zweite Wert mit einer vorgegebenen positiven Mindestbeschleunigung verglichen.

Unterschreitet der zweite Wert die vorgegebene positive Mindestbeschleunigung (-), werden keine weiteren Anpassungen an der Einstellung der Lenkkraftunterstützungsvorrichtung 34 vorgenommen. Das Verfahren kann mit dem Schritt S14 fortfahren, wenn zuvor bereits eine Anpassung der Einstellung der Lenkunterstützungsvorrichtung 34 vorgenommen wurde und diese nun wieder im Schritt S14 auf die Grundeinstellung zurückgesetzt wird. Das Verfahren kann auch mit dem Schritt S16 zur erneuten Ermittlung des zweiten Werts zu einem späteren Zeitpunkt fortfahren, insbesondere, wenn zuvor keine Anpassung der Einstellung der Lenkkraftunterstützungsvorrichtung 34 vorgenommen wurde.

Überschreitet der zweite Weg hingegen die vorgegebene Mindestbeschleunigung (+), so kann mit einem Schritt S20 fortgefahren werden. Erfindungsgemäß bezieht sich der ermittelte zweite Wert auch auf eine negative Beschleunigung (Verzögerung) und vorzugsweise auf eine Bremskraft. Der zweite Wert wird dann erfindungsgemäß im Schritt S18 mit einem Absolutwert eines Grenzwerts für die negative Beschleunigung und vorzugsweise einer Mindestbremskraft verglichen. Nur bei Überschreiten des Grenzwerts und vorzugsweise der Mindestbremskraft wird mit dem Schritt S20 fortgefahren (+). Ansonsten (-) kann beispielsweise mit einem der Schritte S10 bis S16, vorzugsweise mit dem Schritt S16, fortgefahren werden.

Im Schritt S20 erfolgt schließlich eine dynamische Anpassung der Einstellung der Lenkkraftunterstützungsvorrichtung 34, die ursprünglich mittels des ersten Werts als Basiswert eingestellt wurde die Anpassung erfolgt dynamisch während des Fahrens des Kraftfahrzeugs. Beispielsweise kann eine von der Lenkkraftunterstützungsvorrichtung 34 bewirkte Lenkkraftunterstützung verringert werden, wenn das Kraftfahrzeug 10 positiv beschleunigt, wobei sich eine Belastung der Vorderachse verringert und eine Belastung der Hinterachse vergrößert. Es ist auch möglich, dass bei Bremsmanövern oder Kurvenfahrten, die zu einer dynamischen Vergrößerung der Belastung der Vorderachse 16 führen können, die Einstellung der Lenkkraftunterstützungsvorrichtung 34 derart angepasst wird, dass eine größere Lenkkraftunterstützung bereitgestellt wird. Nach dem Schritt S20 kann das Verfahren beispielsweise mit einem der Schritte S10 bis S16, vorzugsweise mit dem Schritt S16, fortgefahren werden.

Es ist zusätzlich möglich, dass eine Information über die ermittelte Vorderachsbelastung (z. B. Vorderachslast oder Vorderachsgewichtskraft) über eine Benutzerschnittstelle, z. B. eine Anzeige, an einen Fahrer oder Benutzer ausgegeben wird. Beispielsweise kann die Vorderachsbelastung auf einer Anzeige einer Benutzerschnittstelle als Zahlenwert und/oder als Diagramm (z. B. Balkendiagramm) angezeigt werden. Die Ausgabe kann beispielsweise auch akustisch und/oder haptisch erfolgen.

Es ist ebenfalls möglich, dass die Ermittlung der Hinterachsbelastung (z. B. Hinterachslast oder Hinterachsgewichtskraft) und/oder der Vorderachsbelastung (z. B. Vorderachslast oder Vorderachsgewichtskraft) mittels des zuvor erwähnten Massenschätzers zu plausibilisieren, insbesondere in Ausführungsformen, in denen der Masseschätzer nicht zum Ermitteln eines Schwerpunkts benötigt oder eingesetzt wird. Dabei kann der Massenschätzer beispielsweise die Hinterachslast, die Hinterachsgewichtskraft, die Vorderachslast und/oder die Vorderachsgewichtskraft schätzen. Die geschätzten Werte können von dem zentralen Steuergerät 32 mit den ermittelten Werten für die Hinterachslast, die Hinterachsgewichtskraft, die Vorderachslast und/oder über die Vorderachsgewichtskraft verglichen werden. Bei zu großen Abweichungen kann beispielsweise eine Ausgabe über eine Benutzerschnittstelle erfolgen und/oder das Verfahren neu gestartet werden.

Die Erfindung ist nicht auf die vorstehend beschriebenen bevorzugten Ausführungsbeispiele beschränkt. Vielmehr ist eine Vielzahl von Varianten und Abwandlungen entsprechend der beiliegenden Ansprüche möglich.

**Bezugszeichenliste**

| | |
|---|---|
| 10 | Kraftfahrzeug (z. B. Sattelzugmaschine) |
| 12 | Sattelauflieger |
| 14 | Königszapfen |
| 16 | Vorderachse |
| 18 | Hinterachse |
| 20 | Stahlfeder (Stahlblattfeder) |
| 22 | Hinterachsluftfederanlage |
| 24 | Luftfederbalg |
| 26 | Drucksensor |
| 28 | Steuergerät |
| 30 | Lenksystem |
| 32 | Zentrales Steuergerät |
| 34 | Lenkkraftunterstützungsvorrichtung |
| S10-S20 | Verfahrensschritte |

**Patentansprüche**

1. Verfahren zur Einstellung einer Lenkkraftunterstützungsvorrichtung (34) einer Vorderachse (16) eines Kraftfahrzeugs (10), vorzugsweise eines Nutzfahrzeugs, aufweisend:

   Erfassen mindestens eines Druckwerts einer Hinterachsluftfederanlage (22) zur Niveauregulierung einer Hinterachse (18) des Kraftfahrzeugs (10);
   Ermitteln eines ersten Werts, der sich auf eine Belastung der Vorderachse (16) des Kraftfahrzeugs (10) bezieht, basierend auf dem erfassten mindestens einen Druckwert; und
   Einstellen einer Grundeinstellung der Lenkkraftunterstützungsvorrichtung (34) basierend auf dem ermittelten ersten Wert;
   Ermitteln eines zweiten Werts, der sich auf einen aktuellen Betrieb des Kraftfahrzeugs (10) während des Fahrens des Kraftfahrzeugs (10) bezieht; und
   Anpassen der Grundeinstellung der Lenkkraftunterstützungsvorrichtung (34) basierend auf dem ermittelten zweiten Wert, wobei das Anpassen der Grundeinstellung nur temporär solange erfolgt:

- bis der ermittelte zweite Wert sich auf eine aktuelle Beschleunigung bezieht, die kleiner als ein vorgegebener positiver Beschleunigungsgrenzwert ist; und/oder
- bis der ermittelte zweite Wert sich auf eine aktuelle Beschleunigung bezieht, die kleiner als ein Absolutwert eines vorgegebenen negativen Beschleunigungsgrenzwerts ist.

2. Verfahren nach Anspruch 1, wobei der mindestens eine Druckwert:

in einem normalen Lastzustand des Kraftfahrzeugs (10) erfasst und/oder aktualisiert wird; und/oder
im Stand des Kraftfahrzeugs (10) erfasst und/oder aktualisiert wird; und/oder
während des Fahrens des Kraftfahrzeugs (10) bei im Wesentlichen gleichbleibender Fahrgeschwindigkeit, bei im Wesentlichen beschleunigungsfreier Fahrt und/oder bei Geradeausfahrt erfasst und/oder aktualisiert wird.

3. Verfahren nach Anspruch 2, wobei:
das Ermitteln des ersten Werts und das Einstellen der Grundeinstellung wiederholt wird, wenn der mindestens eine Druckwert aktualisiert wird.

4. Verfahren nach einem der vorherigen Ansprüche, wobei:
das Ermitteln des ersten Werts basierend auf dem erfassten Druckwert ferner basierend auf einem vorbestimmten oder geschätzten Schwerpunkt des Kraftfahrzeugs (10), einem vorbestimmten oder geschätzten Lasteinleitungspunkt des Kraftfahrzeugs (10) und/oder einer vorbestimmten oder geschätzten Masse des Kraftfahrzeugs (10) erfolgt.

5. Verfahren nach einem der vorherigen Ansprüche, wobei das Erfassen des mindestens einen Druckwerts der Hinterachsluftfederanlage (22) aufweist:

Erfassen eines Druckwerts eines Luftfederbalgs (24) der Hinterachsluftfederanlage (22) auf lediglich einer Fahrzeuglängsseite des Kraftfahrzeugs (10); oder
Erfassen eines ersten Druckwerts eines ersten Luftfederbalgs (24) der Hinterachsluftfederanlage (22); und
Erfassen eines zweiten Druckwerts eines zweiten Luftfederbalgs (24) der Hinterachsluftfederanlage (22), wobei der erste Luftfederbalg (24) und der zweite Luftfederbalg (24) an einander gegenüberliegenden Fahrzeuglängsseiten des Kraftfahrzeugs (10) angeordnet sind.

6. Verfahren nach einem der vorherigen Ansprüche, wobei:

das Anpassen der Grundeinstellung dynamisch oder fortwährend während des Betriebs des Kraftfahrzeugs (10) erfolgt; und/oder
das Ermitteln des zweiten Werts fortwährend während des Betriebs, vorzugsweise während des Fahrens, des Kraftfahrzeugs (10) erfolgt.

7. Verfahren nach einem der vorherigen Ansprüche, wobei:

das Anpassen der Grundeinstellung und/oder das Ermitteln des zweiten Werts nur freigegeben ist, wenn das Kraftfahrzeug (10) eine vorgegebene Betriebsbedingung erfüllt; und/oder
das Anpassen der Grundeinstellung und/oder das Ermitteln des zweiten Werts nur freigegeben ist, wenn eine aktuelle Fahrgeschwindigkeit des Kraftfahrzeugs (10) eine vorgegebene Mindestgeschwindigkeit des Kraftfahrzeugs (10) überschreitet.

8. Verfahren nach einem der vorherigen Ansprüche, wobei:
der zweite Wert von einem Antiblockiersystem, einem elektronischen Bremssystem, einem elektronischen Stabilitätsprogramm, einem Beschleunigungssensor und/oder einem Kraftsensor des Kraftfahrzeugs (10) ermittelt wird.

9. Verfahren nach einem der vorherigen Ansprüche, wobei:

sich der zweite Wert auf eine aktuelle Beschleunigung der Vorderachse (16) bezieht; und/oder
sich der zweite Wert auf eine aktuelle Bremskraft des Kraftfahrzeugs (10) und/oder der Vorderachse (16) bezieht.

10. Verfahren nach Anspruch 9, wobei:

die aktuelle Beschleunigung positiv oder negativ ist oder sein kann; und/oder
die aktuelle Beschleunigung eine Querbeschleunigung und/oder eine Längsbeschleunigung ist oder sein kann.

11. Verfahren nach einem der vorherigen Ansprüche, wobei das Anpassen der Grundeinstellung nur erfolgt, wenn:

der ermittelte zweite Wert größer als ein vorbestimmter Grenzwert ist; und/oder

sich der ermittelte zweite Wert auf eine aktuelle Beschleunigung bezieht, die größer als ein vorgegebener positiver Beschleunigungsgrenzwert ist; und/oder

sich der ermittelte zweite Wert auf eine aktuelle Beschleunigung bezieht, die größer als ein Absolutwert eines vorgegebenen negativen Beschleunigungsgrenzwerts ist; und/oder

sich der ermittelte zweite Wert auf eine Bremskraft bezieht, die größer als eine vorgegebene Mindestbremskraft ist.

12. Verfahren nach einem der vorherigen Ansprüche, wobei das Anpassen der Grundeinstellung nur temporär solange erfolgt:

bis der ermittelte zweite Wert sich auf eine aktuelle Bremskraft bezieht, die kleiner als eine vorgegebenen Mindestbremskraft ist.

13. Kraftfahrzeug (10), vorzugsweise Nutzfahrzeug, aufweisend:

ein Lenksystem (30) für das Kraftfahrzeug (10), aufweisend eine, vorzugsweise hydraulische, elektrische oder elektrohydraulische, Lenkkraftunterstützungsvorrichtung (34) zum Aufbringen einer einen Fahrer des Kraftfahrzeugs (10) beim Lenken unterstützenden Lenkkraft und ein Steuergerät (32), das dazu ausgebildet ist, ein Verfahren nach einem der vorherigen Ansprüche auszuführen; und

eine Hinterachsluftfederanlage (22) mit mindestens einem Drucksensor (26).


**Claims**

1. Method for adjusting a steering force assistance device (34) of a front axle (16) of a motor vehicle (10), preferably a commercial vehicle, comprising:

detecting at least one pressure value of a rear axle air suspension system (22) for level control of a rear axle (18) of the motor vehicle (10);
determining a first value, which relates to a load on the front axle (16) of the motor vehicle (10), based on the detected at least one pressure value; and
adjusting a basic setting of the steering force assisting device (34) based on the determined first value;
determining a second value, which relates to a current operation of the motor vehicle (10) while the motor vehicle (10) is being driven; and
adjusting the basic setting of the steering force assisting device (34) based on the determined second value, wherein the adjusting of the basic setting is only carried out temporarily:

- until the determined second value relates to an current acceleration which is smaller than a predetermined positive acceleration limit value; and/or
- until the determined second value relates to a current acceleration which is smaller than an absolute value of a predetermined negative acceleration limit value.

2. Method according to claim 1, wherein the at least one pressure value:

is detected and/or updated in a normal load state of the motor vehicle (10); and/or
is detected and/or updated in a stationary state of the motor vehicle (10); and/or
during the driving of the motor vehicle (10) at a substantially constant driving speed, during a substantially acceleration-free drive and/or during straight-ahead driving.

3. Method according to claim 2, wherein:
the determining of the first value and the setting of the basic setting are repeated when the at least one pressure value is updated.

4. Method according to one of the preceding claims, wherein:
the determining of the first value based on the detected pressure value is further based on a predetermined or estimated center of gravity of the motor vehicle (10), a predetermined or estimated load introduction point of the motor vehicle (10) and/or a predetermined or estimated mass of the motor vehicle (10).

5. Method according to one of the preceding claims, wherein the determining of the at least one pressure value of the rear axle air suspension system (22) comprises:

detecting a pressure value of an air-spring bellows (24) of the rear-axle air-spring system (22) on only one longitudinal side of the motor vehicle (10); or
detecting a first pressure value of a first air-spring bellows (24) of the rear-axle air-spring system (22); and
detecting a second pressure value of a second air-spring bellows (24) of the rear-axle air-spring system (22), wherein the first air-spring bellows (24) and the second air-spring bellows (24) are arranged on opposite longitudinal sides of the motor vehicle (10).

6. Method according to one of the preceding claims, wherein:

the adjusting of the basic setting is carried out dynamically or continuously during the operation of the motor vehicle (10); and/or
the determining of the second value is carried out continuously during the operation, preferably while driving, of the motor vehicle (10).

7. Method according to one of the preceding claims, wherein:

the adjusting of the basic setting and/or the determining of the second value is only enabled if the motor vehicle (10) fulfills a predetermined operating condition; and/or
the adjusting of the basic setting and/or the determining of the second value is only enabled if a current driving speed of the motor vehicle (10) exceeds a predetermined minimum speed of the motor vehicle (10).

8. Method according to one of the preceding claims, wherein:
the second value is determined by an anti-lock braking system, an electronic braking system, an electronic stability program, an acceleration sensor and/or a force sensor of the motor vehicle (10).

9. Method according to one of the preceding claims, wherein:

the second value relates to a current acceleration of the front axle (16); and/or
the second value relates to a current braking force of the motor vehicle (10) and/or of the front axle (16).

10. Method according to claim 9, wherein:

the current acceleration is or may be positive or negative; and/or
the current acceleration is or may be a lateral acceleration and/or a longitudinal acceleration.

11. Method according to one of the preceding claims, wherein the adjusting of the basic setting is only carried out if:

the determined second value is greater than a predetermined limit value; and/or
the determined second value relates to a current acceleration which is greater than a predetermined positive acceleration limit value; and/or
the determined second value relates to a current acceleration which is greater than an absolute value of a predetermined negative acceleration limit value; and/or

the determined second value relates to a braking force which is greater than a predetermined minimum braking force.

12. Method according to one of the preceding claims, wherein the adjusting of the basic setting is only carried out temporarily until
the determined second value relates to a current braking force which is lower than a predetermined minimum braking force.

13. Motor vehicle (10), preferably a commercial vehicle, comprising:

a steering system (30) for the motor vehicle (10), comprising a preferably hydraulic, electric or electrohydraulic steering force assisting device (34) for applying a steering force assisting a driver of the motor vehicle (10) when steering, and a control unit (32) configured to carry out a method according to one of the preceding claims; and
a rear axle air suspension system (22) with at least one pressure sensor (26).

**Revendications**

1. Procédé de réglage d'un dispositif de direction assistée (34) d'un essieu avant (16) d'un véhicule automobile (10), de préférence d'un véhicule utilitaire, ledit procédé comportant les étapes suivantes :

détecter au moins une valeur de pression d'un système de suspension pneumatique d'essieu arrière (22) afin de réguler le niveau d'un essieu arrière (18) du véhicule automobile (10) ;
déterminer une première valeur, qui concerne une charge sur l'essieu avant (16) du véhicule automobile (10), sur la base de l'au moins une valeur de pression détectée ; et
définir un réglage de base du dispositif de direction assistée (34) sur la base de la première valeur déterminée ;
déterminer une deuxième valeur qui concerne un fonctionnement actuel du véhicule automobile (10) pendant la conduite du véhicule automobile (10) ; et
adapter le réglage de base du dispositif de direction assistée (34) sur la base de la deuxième valeur déterminée, l'adaptation du réglage de base n'étant effectuée que temporairement tant que :

- la deuxième valeur déterminée concerne une accélération actuelle qui est inférieure à une valeur d'accélération limite positive spécifiée ; et/ou

- la deuxième valeur déterminée concerne une accélération actuelle qui est inférieure à une valeur absolue d'une valeur d'accélération limite négative spécifiée.

2. Procédé selon la revendication 1, l'au moins une valeur de pression :

   étant détectée et/ou actualisée dans un état de charge normal du véhicule automobile (10) ; et/ou étant détectée et/ou actualisée lorsque le véhicule automobile (10) est à l'arrêt ; et/ou étant détectée et/ou actualisée pendant la conduite du véhicule automobile (10) à une vitesse de conduite sensiblement constante, pendant une conduite sensiblement sans accélération et/ou pendant une conduite en ligne droite.

3. Procédé selon la revendication 2,
   la détermination de la première valeur et la réalisation du réglage de base étant répétées lorsque l'au moins une valeur de pression est actualisée.

4. Procédé selon l'une des revendications précédentes, la détermination de la première valeur étant effectuée sur la base de la valeur de pression détectée et en outre sur la base d'un centre de gravité prédéterminé ou estimé du véhicule automobile (10), d'un point d'application de charge prédéterminé ou estimé du véhicule automobile (10) et/ou d'une masse prédéterminée ou estimée du véhicule automobile (10).

5. Procédé selon l'une des revendications précédentes, la détection de l'au moins une valeur de pression du système de suspension pneumatique d'essieu arrière (22) comprenant les étapes suivantes :

   détecter une valeur de pression d'un soufflet de suspension pneumatique (24) du système de suspension pneumatique d'essieu arrière (22) sur un seul côté longitudinal du véhicule automobile (10) ; ou
   détecter une première valeur de pression d'un premier soufflet de suspension pneumatique (24) du système de suspension pneumatique d'essieu arrière (22) ; et
   détecter une deuxième valeur de pression d'un deuxième soufflet de suspension pneumatique (24) du système de suspension pneumatique d'essieu arrière (22), le premier soufflet de suspension pneumatique (24) et le deuxième soufflet de suspension pneumatique (24) étant disposés sur des côtés longitudinaux opposés du véhicule automobile (10).

6. Procédé selon l'une des revendications précédentes :

   l'adaptation du réglage de base étant effectuée de manière dynamique ou continue pendant le fonctionnement du véhicule automobile (10) ; et/ou
   la détermination de la deuxième valeur étant effectuée en continu pendant le fonctionnement, de préférence pendant la conduite, du véhicule automobile (10).

7. Procédé selon l'une des revendications précédentes :

   l'adaptation du réglage de base et/ou la détermination de la deuxième valeur n'étant autorisée que si le véhicule automobile (10) satisfait à une condition de fonctionnement spécifiée ; et/ou
   l'adaptation du réglage de base et/ou la détermination de la deuxième valeur n'étant autorisée que si une vitesse de conduite actuelle du véhicule automobile (10) dépasse une vitesse minimale spécifiée du véhicule automobile (10).

8. Procédé selon l'une des revendications précédentes, la deuxième valeur étant déterminée par un système de freinage antiblocage, un système de freinage électronique, un programme de stabilité électronique, un capteur d'accélération et/ou un capteur de force du véhicule automobile (10).

9. Procédé selon l'une des revendications précédentes :

   la deuxième valeur concernant une accélération actuelle de l'essieu avant (16) ; et/ou
   la deuxième valeur concernant une force de freinage actuelle du véhicule automobile (10) et/ou de l'essieu avant (16).

10. Procédé selon la revendication 9 :

    l'accélération actuelle étant ou pouvant être positive ou négative ; et/ou
    l'accélération actuelle étant ou pouvant être une accélération transversale et/ou une accélération longitudinale.

11. Procédé selon l'une des revendications précédentes, l'adaptation du réglage de base n'étant effectuée que si :

    la deuxième valeur déterminée est supérieure à une valeur limite prédéterminée ; et/ou
    la deuxième valeur déterminée concerne une accélération actuelle qui est supérieure à une valeur d'accélération limite positive spécifiée ; et/ou

la deuxième valeur déterminée concerne une accélération actuelle qui est supérieure à une valeur absolue d'une valeur d'accélération limite négative spécifiée ; et/ou

la deuxième valeur déterminée concerne une force de freinage qui est supérieure à une force de freinage minimale spécifiée.

12. Procédé selon l'une des revendications précédentes, l'adaptation du réglage de base n'étant effectuée que temporairement tant que :

la deuxième valeur déterminée concerne une force de freinage actuelle qui est inférieure à une force de freinage minimale spécifiée.

13. Véhicule automobile (10), de préférence véhicule utilitaire, comportant :

un système de direction (30) destiné au véhicule automobile (10), ledit système de direction comportant un dispositif de direction assistée (34), de préférence hydraulique, électrique ou électrohydraulique, destiné à appliquer une force de direction qui assiste un conducteur du véhicule automobile (10) lors de la direction et une unité de commande (32) qui est conçue pour mettre en œuvre un procédé selon l'une des revendications précédentes ; et

un système de suspension pneumatique d'essieu arrière (22) muni d'au moins un capteur de pression (26).

FIG. 1

FIG. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10245975 A1
- DE 102009011044 A1
- EP 3466754 A1
- DE 3909210 A1
- DE 102011011000 A1
- DE 102018200473 A1
- DE 3922527 A1